# EUROPEAN PATENT SPECIFICATION

(11) **EP 3 376 657 B1**
(45) Date of publication and mention of the grant of the patent: **02.09.2020**
(21) Application number: 16863565.4
(22) Date of filing: 01.11.2016
(51) Int. Cl.: H02M 7/00, H02M 3/158

(54) **MULTIPLEXED CARRIER PHASE SHIFT METHOD FOR CONVERTER**
MULTIPLEX-TRÄGERPHASENWECHSELVERFAHREN FÜR UMRICHTER
PROCÉDÉ DE DÉPHASAGE DE PORTEUSE MULTIPLEXÉE POUR CONVERTISSEUR

(30) Priority: 11.11.2015 CN 201510766068
(43) Date of publication of application: 19.09.2018
(73) Proprietor: CRRC Zhuzhou Institute Co., Ltd., Zhuzhou, Hunan 412001 (CN)
(72) Inventor: FENG, Jianghua, Zhuzhou Hunan 412001 (CN); LIU, Kean, Zhuzhou Hunan 412001 (CN); SHANG, Jing, Zhuzhou Hunan 412001 (CN); LUO, Wenguang, Zhuzhou Hunan 412001 (CN); HU, Jingyu, Zhuzhou Hunan 412001 (CN); ZHANG, Zhixue, Zhuzhou Hunan 412001 (CN); MEI, Wenqing, Zhuzhou Hunan 412001 (CN); ZHANG, Zhibing, Zhuzhou Hunan 412001 (CN); FU, Gang, Zhuzhou Hunan 412001 (CN); CHEN, Zhibo, Zhuzhou Hunan 412001 (CN)
(74) Representative: Reuther, Martin
(86) International application number: PCT/CN2016/104227
(87) International publication number: WO 2017/080388

(56) References cited:
- CN-A- 103 915 845
- CN-A- 104 578 070
- CN-B- 104 638 955
- CN-U- 203 589 729
- CN-U- 203 589 729
- US-A1- 2014 225 457

## Description

### FIELD OF THE INVENTION

The present disclosure relates to the technical field of converter, and particularly to a carrier phase-shifting method of multiple converters.

### BACKGROUND OF THE INVENTION

Nowadays, the power electronic technology is developing at a fast speed, and thus power electronic rectifiers are widely used on high-power electronic conversion occasions, such as rail transport, wind power generation, photovoltaic power generation, metallurgy and other heavy industry fields. With continuous development of control technology, power electronic rectifiers are gradually developed into full control mode using Sinusoidal Pulse Width Modulation (SPWM) from no-control rectification mode. At the same time, due to the continuous improvement of power level and increasingly high requirement for harmonic indicator, Pulse Width Modulation (PWM) rectifiers need to be in multiple parallel connection with one another so as to realize high-power operation and simultaneously reduce system harmonics. In multiplex technology, a carrier phase-shifting SPWM mode is generally used so as to perform carrier phase-shifting on triangular carrier in carrier modulation of different converters and eliminate specific subharmonics.

The contradiction between switching frequency and capacity of a power device is solved by the carrier phase-shifting SPWM technology. In this technology, lower subharmonics can offset each other and a relatively high equivalent switching frequency can be obtained. Thus, the SPWM modulation technology is widely used on high-power occasions. Accordingly, the multiplex technology is more and more popular. However, since the work condition of the system is becoming increasingly complicated, there are disadvantages in carrier phase-shifting, which is a key point of the multiplex technology. In general, the multiplicity of the operating converter in the system is a fixed value, and the system will allocate a fixed phase to each converter according to a certain phase-shifting angle. However, since the work condition of the system is becoming increasingly complicated, during operation of the system, there would be a situation of dynamic adding or removing of one or a plurality of converter unit(s). However, at present, there is no mature carrier phase-shifting modulation method through which dynamic phase-shifting can be performed in real time in different work conditions according to multiplicity of operating converters so as to achieve a best harmonic inhibition effect. Moreover, if phase-shifting is not performed timely according to the multiplicity of the operating four-quadrant converter, harmonic surge would be resulted in.

Therefore, a carrier phase-shifting method of multiple converters is needed to realize dynamic phase-shifting according to multiplicity of operating converter in real time in different work conditions so as to achieve a best harmonic inhibition effect.

Such a carrier phase-shifting method of (N) multiple converters is known out of the CN 203 589 729 U, which method is including obtaining in-off status information of said multiple converters, converting the system to (N-1) in the next switching cycle, dynamically adjusting the work mode the actual operation condition.

### SUMMARY OF THE INVENTION

The present disclosure aims to provide a carrier phase-shifting method of multiple converters so as to realize dynamic phase-shifting according to multiplicity of operating converter in real time in different work conditions, which is a technical problem not being solved in traditional carrier phase-shifting method.

This problem is solved by a method according to Claim 1. Preferred embodiments are defined in dependent claims. The invention is set out in the appended set of claims.

### BRIEF DESCRIPTION OF THE DRAWINGS

The drawings necessary for explaining the embodiments are introduced briefly below to illustrate the technical solutions of the embodiments of the present disclosure more clearly. In the drawings:
Fig. 1 is a flow chart of a carrier phase-shifting method of multiple converters according to one embodiment of the present disclosure;
Fig. 2 schematically shows a carrier phase-shifting system of multiple converters according to one embodiment of the present disclosure; and
Fig. 3 is a flow chart of carrier phase-shifting of a converter control unit according to one embodiment of the present disclosure.

### DETAILED DESCRIPTION OF THE EMBODIMENTS

The present disclosure will be explained in details with reference to the embodiments and the accompanying drawings, whereby it can be fully understood how to solve the technical problem by the technical means according to the present disclosure and achieve the technical effects thereof, and thus the technical solution according to the present disclosure can be implemented. It should be noted that, as long as there is no conflict, all the technical features mentioned in all the embodiments may be combined together in any manner, and the technical solutions obtained in this manner all fall within the scope of the present disclosure.

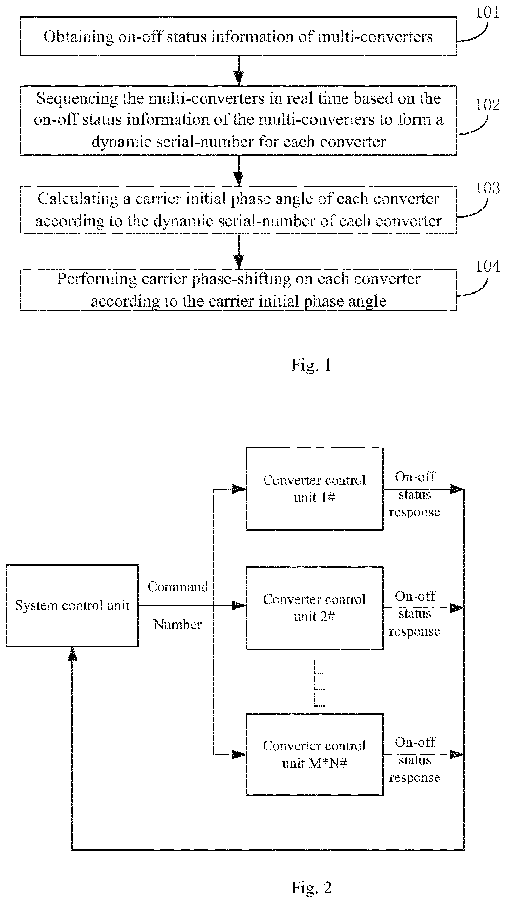

The embodiment of the present disclosure provides a carrier phase-shifting method of multiple converters. As shown in Fig. 1, the method comprises step 101, step 102, step 103 and step 104. In step 101, on-off status information of multiple converters is obtained. The on-off status information refers to on or off status information of each converter in a multi-converter system. In step 102, the multiple converters are sequenced in real time based on the on-off status information of the multiple converters. If a converter is removed from or added to the multi-converter system, the multiple converters in the system are sequenced once again to form a dynamic serial-number for each converter. In step 103, after the converters are sequenced once again, a carrier initial phase angle of each converter is calculated according to the dynamic serial-number of each converter. In step 104, carrier phase-shifting is performed on each converter according to the carrier initial phase angle of each converter obtained through calculation. Automatic and dynamic carrier phase-shifting of the system can be realized, so that the carriers in the multi-converter system can be phase shifted by a certain angle, and a harmonic inhibition effect can be achieved.

According to an embodiment of the present disclosure, the step that the multiple converters are sequenced in real time is described specifically as follows. First, each converter of the multiple converters is numbered according to a pre-set rule, which is formulated according to need analysis. After the numbering step is performed, serial-number array is constructed according to numbers of the multiple converters. The serial-number array is a set of initial serial-numbers of the multiple converters arranged according to the numbers. Elements in the serial-number array each have an initial serial-number. Specific construction mode of the serial-number array, for example, an initial serial-number corresponding to a certain number, is determined by a corresponding protocol which is formulated after need analysis. After the serial-number array is constructed, elements in the serial-number array are moved in real time based on on-off status of the multiple converters. Moving method of the elements can be arranged according to structure of the serial-number array. After the elements in the serial-number array are moved based on on-off status of the multiple converters, a dynamic serial-number corresponding to a number of each converter is formed. That is, a dynamic serial-number of the converter is a serial-number corresponding to the number of the converter in the serial-number array.

Further, in one embodiment of the present disclosure, an initial serial-number of each multi-converter is the same as the number thereof. It is assumed that, in an initial state, all converters are in an on state. The elements in the serial-number array are moved based on on-off status of the multiple converters in a following manner. If a converter numbered *k* in the multiple converters stops working, the elements in the serial-number array are moved cyclically by one to a higher position from a *k^{th}* element. That is, before moving, the *k^{th}* element in the serial-number array is *k,* while after moving, a *k^{th}* element is 0, and a *(k+1)^{th}* element is *k,* and so forth. If a converter numbered *k* of the multiple converters starts working, the elements in the serial-number array are moved cyclically by one to a lower position from a *k^{th}* element. That is, before moving, a *k^{th}* element is 0, and a *(k+1)^{th}* element is *k,* while after moving, a *k^{th}* element is *k,* and a *(k+1)^{th}* element is *k*+*1.* After the serial-number array is moved, the *k^{th}* element is a dynamic serial-number of a converter numbered *k.*

More specifically, in step 103, a carrier initial phase angle of each converter is calculated according to the dynamic serial-number of each converter in a following manner. A carrier initial phase angle of a converter is a product of a quotient obtained through dividing the dynamic serial-number of the converter by a dynamic total of the converters and 180°. When a 180°/N phase-shifting modulation method is used, harmonic content is low, which is applicable to practical use in projects. The dynamic total of the converters which are in the on state in the multiple converters is obtained according to the on-off status information of the multiple converters.

Further, during carrier phase-shifting process, when a fundamental wave of an input voltage of the converter passes zero point, the carrier initial phase angle, which is obtain by calculation, is applied to generation of a carrier of the converter. In this manner, it can be ensured that initial phase angle allocation of each converter is performed at the same time.

The embodiment of the present disclosure further provides a carrier phase-shifting system of multiple converters. As shown in Fig. 2, the system comprises a system control unit and a plurality of converter control units. The carrier phase-shifting method and system of multiple converters provided by the embodiment of the present disclosure will be further illustrated hereinafter combining a traditional on-board four-quadrant converter system. The on-board four-quadrant converter system comprises N transformers, each of which provides power for M four-quadrant modules. Each four-quadrant converter is provided with a converter control unit, and the system comprises M^{∗}N four-quadrant converters in total. The system requires that, the M four-quadrant modules included in each converter be phase shifted, and that the M^{∗}N four-quadrant converters included in the whole system be also phase shifted, so as to minimize harmonic content in the system.

In an initial state, all the four-quadrant converters are numbered by the system control unit. Number of each four-quadrant converter is i+j^{∗}N(1≤i≤N)(0≤j<M), wherein N is the quantity of converters in a converter multiple system, M is a multiplicity of converter powered by each transformer, i is a serial-number of a transformer (from 1 to N), and j is a serial-number of a converter powered by one transformer (from 0 to M-1).

Each four-quadrant converter control unit sends on-off status information of its four-quadrant converter to the system control unit. A command is generated according to the on-off status information and the numbers of the multiple converters. The command comprises binary on-off information of multiple converters arranged according to the numbers, wherein 1 means that a converter is in an on state, and 0 means that a converter is in an off state. A (i+j^{∗}N)^{th} element of the command represents on-off status of a j^{th} four-quadrant module of an i^{th} converter.

The system control unit sends the command and number to each four-quadrant converter control unit. The converter control unit obtains its number, analyzes the received command, obtains total quantity of four-quadrant converters operating in the system, and generates a serial-number array NUM[M^{∗}N]. In the serial-number array NUM[M^{∗}N], initial serial-numbers are consistent with numbers, i.e., NUM[M^{∗}N] ={(M^{∗}N, M^{∗}N), ... (2, 2), (1, 1)}.

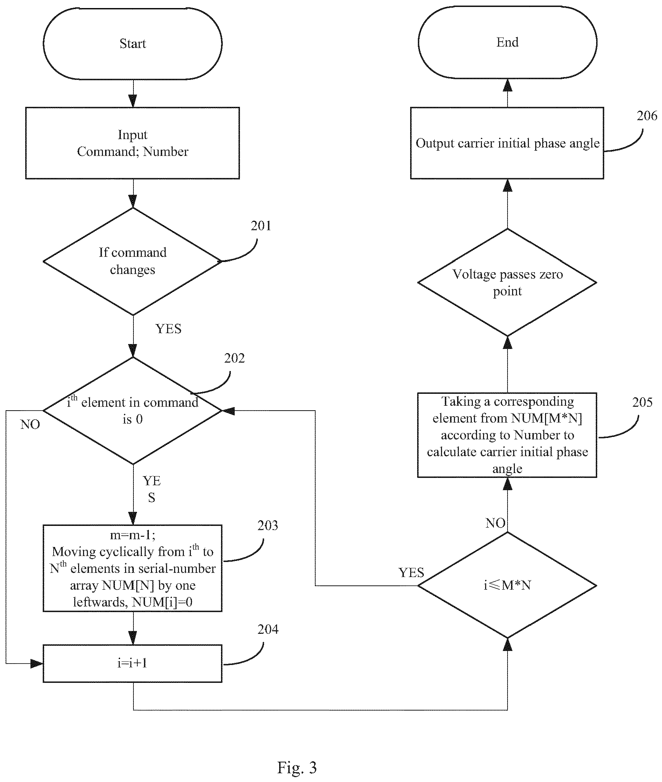

As shown in Fig. 3, the step that the four-quadrant converter control unit generates dynamic serial-number according to command and number and performs dynamic carrier phase-shifting on the four-quadrant converter is specifically as follows.

In step 201, the four-quadrant converter control unit determines whether the command changes. If the command changes, it means that a four-quadrant converter is removed from or added to the system. Then, steps 202 to 204 are performed to determine whether each element (from a first one to a last one) in the command is 0.

In step 202, if an i^{th} element is 0, step 203 is performed. If the i^{th} element is not 0, step 204 is performed. An initial value of i is 1.

In step 203, the elements in the serial-number array NUM[M^{∗}N] is moved cyclically by one to a higher position from the i^{th} element. The i^{th} element in the array is 0, i.e., NUM[i]=0. The array after moving is NUM[M^{∗}N] ={(M^{∗}N-1, M^{∗}N), ... (i, i+1), (0, i) ... (2, 2), (1, 1)}. At the same time, 1 is subtracted from dynamic total m of the four-quadrant converters, and then step 204 is performed.

In step 204, 1 is added to i, and whether i≤M^{∗}N is determined. If a determination result is yes, step 202 is returned, and an (i+1)^{th} element in the command is determined until it is determined that i>M^{∗}N. That is, after determination on each element in the command is completed, an updated serial-number array and dynamic total of the converters are obtained. Then, step 205 is performed. Alternatively, the initial value of i can be set as 0 corresponding to a first element in the command, and whether i<M^{∗}N is determined in this step.

In step 205, a u^{th} element NUM[u] is taken by a four-quadrant converter control unit numbered u from the serial-number array NUM[M^{∗}N] after moving as a dynamic serial-number of the four-quadrant converter, and a carrier initial phase angle of the four-quadrant converter is calculated according to (NUM[u]^{∗}180°)/m, wherein m is a dynamic total of four-quadrant converters operating in the system.

In step 206, when a fundamental wave of an input voltage of the converter passes zero point, the carrier initial phase angle generated through calculation is applied to generation of carrier of the converter. Since all the transformers are in parallel connection with one another and are powered by one same power supply network, the four-quadrant converters can receive same network voltage waveforms, and the waveforms are the same as each other when the fundamental wave of the input voltage passes zero point. Since the carrier initial phase angle is allocated at a time when the fundamental wave of the input voltage of the converter passes zero point, it can be ensured that allocation of the initial phase angle to each of the four-quadrant converters is performed at the same time.

In the carrier phase-shifting method of multiple converters provided herein, a control logic combining the command and the number of the converter is used, and numbering rule as well as serial-number array constructing and moving rules are set according to needs, whereby all 2^{N} allocation modes of carrier initial phase angles of N converter modules in the system can be realized, and carrier initial phase angle allocation of any combination can be realized.

By obtaining the multiplicity of the operating converter module in the system through command analysis, the carrier initial phase angle of the corresponding converter can be generated in real time and adaptively. One converter or a plurality of converters would be added to or removed from the system according to work conditions of the system, which will result in change of the multiplicity of operating converter during operation process of the system. According to the control strategy provided by the present disclosure, adaptive allocation of the carrier initial phase angle can be performed in real time according to the multiplicity of operating converters in the system at present, while the system does not need to be powered off and restarted. Therefore, continuous effective operating time of the system can be improved.

The carrier allocation of each converter is performed at a time when a fundamental wave of an input voltage of the converter passes zero point. Therefore, sudden change of current in the converter will not be generated during dynamic allocation process of the carrier initial phase angle, and stability and reliability of the system can be improved.

The above embodiments are described only for better understanding, rather than restricting, the present disclosure. Any person skilled in the art can make amendments to the implementing forms or details without departing from the scope of the present disclosure. The protection scope of the present disclosure shall be determined by the scope as defined in the claims.

## Claims

1. A carrier phase-shifting method of multiple converters, comprising steps of:
numbering the multiple converters as i+j^{∗}N, wherein 1≤i≤N and 0≤ j≤M, N is a quantity of converters in a multi-converter system and N≥2, M is a multiplicity of the converter powered by one transformer, i is a serial-number of a transformer, and j is a serial-number of converter powered by one transformer;
obtaining on-off status information of multiple converters;
constructing a serial-number array according to numbers of the multiple converters, the serial-number array being a set of initial serial-numbers of the multiple converters arranged according to the numbers;
moving elements in the serial-number array in real time based on on-off status of the multiple converters to form a dynamic serial-number for each converter that corresponds to a number of the converter;
calculating a carrier initial phase angle of each converter according to the dynamic serial- number of each converter;
performing carrier phase-shifting on each converter according to the carrier initial phase angle; and
wherein the step of forming a dynamic serial-number for each converter that corresponds to a number of the converter further comprises:
an initial serial-number of each multi-converter being the same as the number thereof, moving cyclically the elements in the serial-number array by one to a higher position from a *k^{th}* element if a converter numbered *k* in the multiple converters stops working; and
moving cyclically the elements in the serial-number array by one to a lower position from a *k^{th}* element if a converter numbered *k* in the multiple converters starts working, wherein after the serial-number array is moved, the *k^{th}* element is a dynamic serial-number of a converter numbered *k*.

2. The carrier phase-shifting method according to claim 1, wherein the step of numbering the multiple converters further comprises:
generating a command according to the on-off status information and the numbers of the multiple converters, the command comprising binary on-off information of multiple converters arranged according to the numbers, wherein 1 means that a converter is in an on state, and 0 means that a converter is in an off state.

3. The carrier phase-shifting method according to claim 2, wherein the step of forming a dynamic serial-number for each converter that corresponds to a number of the converter further comprises:
determining one by one whether each element in the command is 0;
moving cyclically, when a *k^{th}* element in the command is 0, the elements in the serial-number array by one to a higher position from the *k^{th}* element; and
taking a *u^{th}* element in the serial-number array as a dynamic serial-number of a converter numbered *u* after determination on all elements in the command is completed.

4. The carrier phase-shifting method according to claim 1, wherein the step of calculating a carrier initial phase angle of each converter according to the dynamic serial-number of each converter further comprises:
taking a product of a quotient obtained through dividing the dynamic serial-number of the converter by a dynamic total of the converters and 180° as a carrier initial phase angle of the converter, wherein the dynamic total of the converters is obtained according to the on-off status information of the multiple converters.

5. The carrier phase-shifting method according to claim 4, wherein the step of performing carrier phase-shifting on each converter according to the carrier initial phase angle further comprises:
applying the carrier initial phase angle to generation of a carrier of the converter when a fundamental wave of an input voltage of the converter passes zero point.

## Patentansprüche

1. Trägerphasenwechselverfahren für mehrfache Wandler, das die folgenden Schritte umfasst:
Nummerieren der mehrfachen Wandler anhand von i+j*N, wobei 1 ≤ i ≤ N und 0 ≤ j ≤ M ist, wobei N eine Anzahl von Wandlern in einem Multi-Wandlersystem und N ≥ 2 ist, wobei M eine Vielheit der Wandler ist, die von einem Transformator mit Energie versorgt werden, wobei i eine Seriennummer eines Transformators ist, und wobei j eine Seriennummer eines Wandlers ist, der von einem Transformator mit Energie versorgt wird;
Erhalten von Ein-Aus-Zustandsinformationen von mehrfachen Wandlern;
Aufbauen einer Seriennummernanordnung entsprechend den Nummern der mehrfachen Wandler, wobei die Seriennummernanordnung ein Satz von anfänglichen Seriennummern der mehrfachen Wandler ist, die gemäß den Nummern angeordnet sind;
Bewegen von Elementen in der Seriennummernanordnung in Echtzeit auf der Grundlage eines Ein-Aus-Zustands der mehrfachen Wandler, um eine dynamische Seriennummer für jeden Wandler zu bilden, die einer Nummer des Wandlers entspricht;
Berechnen eines anfänglichen Phasenwinkels des Trägers eines jeden Wandlers entsprechend der dynamischen Seriennummer eines jeden Wandlers;
Durchführen einer Trägerphasenverschiebung auf jedem Wandler entsprechend dem anfänglichen Phasenwinkel des Trägers; und
wobei der Schritt des Bildens einer dynamischen Seriennummer für jeden Wandler, die einer Nummer des Wandlers entspricht, ferner Folgendes umfasst:
bei einer anfänglichen Seriennummer eines jeden Multi-Wandlers, die dieselbe ist wie die Nummer desselben, ein zyklisches Bewegen der Elemente in der Seriennummernanordnung um eines zu einer höheren Position von einem k-ten Element, wenn ein Wandler, der in den mehrfachen Wandlern mit k nummeriert ist, das Arbeiten stoppt; und
zyklisches Bewegen der Elemente in der Seriennummernanordnung um eines zu einer niedrigeren Position von einem k-ten Element, wenn ein Wandler, der in den mehrfachen Wandlern mit k nummeriert ist, das Arbeiten beginnt, wobei, nachdem die Seriennummernanordnung bewegt wird, das k-te Element eine dynamische Seriennummer eines Wandlers ist, der mit k nummeriert ist.

2. Trägerphasenwechselverfahren nach Anspruch 1, wobei der Schritt des Nummerierens der mehrfachen Wandler ferner Folgendes umfasst:
Erzeugen einer Anweisung entsprechend den Ein-Aus-Zustandsinformationen und den Nummern der mehrfachen Wandler, wobei die Anweisung binäre Ein-Aus-Informationen der mehrfachen Wandler, die entsprechend den Nummern angeordnet sind, umfasst, wobei 1 bedeutet, dass sich ein Wandler in einem Ein-Zustand befindet, und wobei 0 bedeutet, dass sich ein Wandler in einem Aus-Zustand befindet.

3. Trägerphasenwechselverfahren nach Anspruch 2, wobei der Schritt des Bildens einer dynamischen Seriennummer für jeden Wandler, die einer Nummer des Wandlers entspricht, ferner Folgendes umfasst:
Bestimmen eines nach dem anderen, ob jedes Element in der Anweisung 0 ist;
dann, wenn ein k-tes Element in der Anweisung 0 ist, ein zyklisches Bewegen der Elemente in der Seriennummernanordnung um eines zu einer höheren Position von dem k-ten Element; und
Vornehmen eines u-ten Elements in der Seriennummernanordnung als einer dynamischen Seriennummer eines Wandlers, der mit u nummeriert ist, nachdem die Bestimmung auf allen Elementen in der Anweisung abgeschlossen ist.

4. Trägerphasenwechselverfahren nach Anspruch 1, wobei der Schritt eines Berechnens eines anfänglichen Phasenwinkels des Trägers eines jeden Wandlers entsprechend der dynamische Seriennummer eines jeden Wandlers ferner Folgendes umfasst:
Vornehmen eines Produktes aus einem Quotienten, der gewonnen wird, indem die dynamische Seriennummer des Wandlers durch eine dynamische Gesamtheit der Wandler dividiert wird, und 180° als einem anfänglichen Phasenwinkel des Trägers des Wandlers, wobei die dynamische Gesamtheit der Wandler gewonnen wird entsprechend den Ein-Aus-Zustandsinformationen der mehrfachen Wandler.

5. Trägerphasenwechselverfahren nach Anspruch 4, wobei der Schritt eines Durchführens einer Trägerphasenverschiebung auf jedem Wandler entsprechend dem anfänglichen Phasenwinkel des Trägers ferner Folgendes umfasst:
Anwenden des anfänglichen Phasenwinkels des Trägers zur Erzeugung eines Trägers des Wandlers, wenn eine Grundwelle einer Eingangsspannung des Wandlers durch den Nullpunkt geht.

## Revendications

1. Procédé de déphasage de porteuse de convertisseurs multiples, comprenant les étapes suivantes :
numérotation des convertisseurs multiples en tant que i+j*N, sachant que 1 ≤ i ≤ N et 0 ≤ j ≤ M, N est une quantité de convertisseurs dans un système à convertisseurs multiples et N ≥ 2, M est une multiplicité de convertisseurs alimentés par un transformateur, i est un numéro de série d'un transformateur, et j est un numéro de série d'un convertisseur alimenté par un transformateur ;
obtention d'informations d'état de marche-arrêt de convertisseurs multiples ;
construction d'un réseau de numéros de série en fonction de numéros des convertisseurs multiples, le réseau de numéros de série étant un ensemble de numéros de série initiaux des convertisseurs multiples disposés en fonction des numéros ;
déplacement d'éléments dans le réseau de numéros de série en temps réel en se basant sur l'état de marche-arrêt des convertisseurs multiples pour former un numéro de série dynamique pour chaque convertisseur qui correspond à un numéro du convertisseur ;
calcul d'un angle de phase initiale de porteuse de chaque convertisseur en fonction du numéro de série dynamique de chaque convertisseur ;
réalisation d'un déphasage de porteuse sur chaque convertisseur en fonction de l'angle de phase initiale de porteuse ; et
l'étape de formation d'un numéro de série dynamique pour chaque convertisseur qui correspond à un numéro du convertisseur comprenant en outre :
un numéro de série initial de chaque convertisseur multiple étant le même que son numéro, en déplaçant cycliquement les éléments dans le réseau de numéro de série à une position plus élevée depuis un kième élément si un convertisseur numéroté k dans les convertisseurs multiples cesse de fonctionner ; et
déplacement cyclique des éléments dans le réseau de numéros de série un par un à une position plus basse depuis un kième élément si un convertisseur numéroté k dans les convertisseurs multiples commence à fonctionner, sachant que, une fois que le réseau de numéro de série est déplacé, le kième élément est un numéro de série dynamique d'un convertisseur numéroté k.

2. Procédé de déphasage de porteuse de convertisseurs multiples selon la revendication 1, dans lequel l'étape de numérotation des convertisseurs multiples comprend en outre :
la génération d'une commande en fonction de l'information d'état de marche-arrêt et des numéros des convertisseurs multiples, la commande comprenant une information de marche-arrêt binaire de convertisseurs multiples disposés en fonction des numéros, 1 signifiant qu'un convertisseur est dans un état de marche, et 0 signifiant qu'un convertisseur est dans un état d'arrêt.

3. Procédé de déphasage de porteuse de convertisseurs multiples selon la revendication 2, dans lequel l'étape de formation d'un numéro de série dynamique pour chaque convertisseur qui correspond à un numéro du convertisseur comprend en outre :
la détermination un par un si chaque élément dans la commande est 0 ;
le déplacement cyclique, lorsqu'un kième élément dans la commande est 0, des éléments dans le réseau de numéro de série un par un à une position plus élevée à partir du kième élément ; et
la prise d'un uième élément dans le réseau de numéros de série comme numéro de série dynamique d'un convertisseur numéroté une fois que la détermination sur tous les éléments dans la commande est achevée.

4. Procédé de déphasage de porteuse de convertisseurs multiples selon la revendication 1, dans lequel l'étape de calcul d'un angle de phase initiale de porteuse de chaque convertisseur en fonction du numéro de série dynamique de chaque convertisseur comprend en outre :
la prise d'un produit d'un quotient obtenu en divisant le numéro de série dynamique du convertisseur par un total dynamique des convertisseurs et 180° comme angle de phase initiale de porteuse du convertisseur, le total dynamique des convertisseurs étant obtenu en fonction de l'état de l'information de marche-arrêt des convertisseurs multiples.

5. Procédé de déphasage de porteuse de convertisseurs multiples selon la revendication 4, dans lequel l'étape de réalisation de déphasage de porteuse sur chaque convertisseur en fonction de l'angle de phase initiale de porteuse comprend en outre :
l'application de l'angle de phase initiale de porteuse à la génération d'une porteuse du convertisseur lorsqu'une onde fondamentale d'une tension d'entrée du convertisseur passe le point zéro.
